(19) Europäisches Patentamt
European Patent Office
Office européen des brevets

(11) **EP 2 712 170 A2**

(12) **EUROPEAN PATENT APPLICATION**

(43) Date of publication:
26.03.2014 Bulletin 2014/13

(51) Int Cl.:
*H04N 1/387* (2006.01)

(21) Application number: 13004530.5

(22) Date of filing: 17.09.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.09.2012 JP 2012210209**

(71) Applicant: **Kyocera Document Solutions Inc.**
**Osaka-shi, Osaka 540-8585 (JP)**

(72) Inventor: **Honda, Toru**
**Osaka-shi, Osaka, 540-8585 (JP)**

(74) Representative: **Schäfer, Matthias W.**
**Schwanseestraße 43**
**81549 München (DE)**

(54) **Image forming apparatus**

(57)    In an image forming apparatus, an area dividing unit extracts character areas in each one of plural page images as objects of combination printing. An area excluding unit excludes a character area that has a size of which a ratio to a largest size of the character areas is smaller than a predetermined threshold value among the character areas extracted by the area dividing unit in each one of the plural page images. A character size identifying unit identifies a smallest character size of the character area that are not excluded by the area excluding unit among the character areas extracted by the area dividing unit in each one of the plural page images. A combination quantity determining unit determines a combination quantity of combination printing on the basis of the smallest character size identified by the character size identifying unit.

FIG. 1

EP 2 712 170 A2

**Description**

BACKGROUND

>

1. FIELD OF THE INVENTION

The present invention relates to an image forming apparatus.

2. DESCRIPTION OF THE RELATED ART

In combination printing, plural page images in a document are reduced and the plural reduced page images are arranged and printed on one page of paper sheet.

In combination printing, since the page image is reduced, the size of a character included in the page image is also reduced.

A printing device determines a magnification of each page image so that a character included in its area has an appropriate size, and lays out, plural page images that have been reduced with the respectively determined magnifications on one page.

Further, another printing device extracts plural character areas in a page image, determines a magnification of each one of the character areas on the basis of a character size of a character included in the character area, and prints a page image in which the plural character areas have been reduced with the respectively determined magnifications.

However, in the aforementioned printing device, when a magnification of a page image is determined for combination printing in consideration with all characters included in the page image, a magnification of a character area that includes a small character is set relatively large and therefore the number of page images included in one page of combination printing is small, and consequently, a large number of paper sheets are consumed.

SUMMARY

An image forming apparatus according to an aspect of the present invention includes an area dividing unit, an area excluding unit, a character size identifying unit, and a combination quantity determining unit. An area dividing unit is configured to extract character areas in each one of plural page images as objects of combination printing by area dividing. An area excluding unit is configured to exclude a character area that has a size of which a ratio to a largest size of the character areas in each one of the plural page images is smaller than a predetermined threshold value among the character areas extracted by the area dividing unit in each one of the plural page images. A character size identifying unit is configured to identify a smallest character size of the character area that are not excluded by the area excluding unit among the character areas extracted by the area dividing unit in each one of the plural page images. A combination quantity determining unit is configured to determine a combination quantity of combination printing on the basis of the smallest character size identified by the character size identifying unit.

These and other objects, features and advantages of the present invention will become more apparent upon treading of the following detailed description along with the accompanied drawings.

BRIEF DESCRIPTION OF THE DRAWINGS

    Fig. 1 shows a block diagram which indicates a configuration of an image forming apparatus according to an embodiment of the present invention;
    Fig. 2 shows a flowchart that explains an action of the image forming apparatus shown in Fig. 1 to perform a job with combination printing; and
    Figs. 3A to 3C show diagrams that indicate an example of a page image.

DETAILED DESCRIPTION

Hereinafter, an embodiment according to an aspect of the present invention will be explained with reference to drawings.

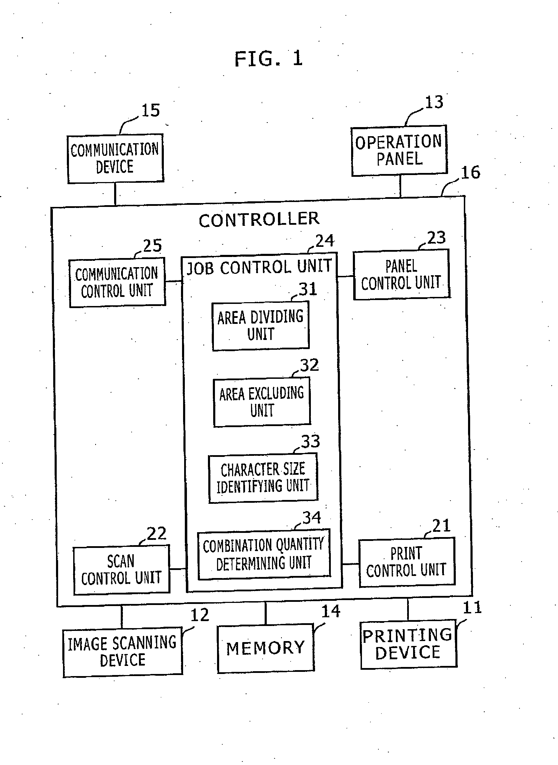

Fig. 1 shows a block diagram which indicates a configuration of an image forming apparatus according to an embodiment of the present invention. The image forming apparatus has a printer function and a scanner function. This image forming apparatus 1 includes a printing device 11, an image scanning device 12, an operation panel 13, a memory 14, a communication device 15, and a controller 16.

The printing device 11 is an internal device that prints each image based on print image data on a printing paper sheet using electrophotography. The print image data is raster image data (e.g. JPEG (Joint Photographic Experts Group) image data) generated in scanning by the image scanning device 12, raster image data generated from PDL (Page Description Language) data, raster image data generated in facsimile reception by an unshown internal facsimile device, or the like.

Further, the image scanning device 12 is an internal device that optically reads- images of a document page by page, and generates image data of each page image.

Furthermore, the operation panel 13 is arranged on a surface of a housing of the image forming apparatus, and includes a display device that displays sorts of information to a user and an input device that detects a user operation. For example, the display device includes a liquid crystal display, and the input device includes button switches, a touch panel, and so on.

Furthermore, the memory 14 is a semiconductor memory that temporarily stores image data and so forth when this image forming apparatus executes a job. A volatile DRAM (Dynamic Random Access Memory) or the like may be used as the memory 14.

Furthermore, the communication device 15 is a circuit that connects to a network and performs data communication with another device (e.g. a host device) connected to the network.

Furthermore, the controller 16 forms sorts of processing units using a microcomputer or an ASIC (Application Specific Integrated Circuit). In this embodiment, the controller 16 forms a print control unit 21, a scan control unit 22, a panel control unit 23, a job control unit 24, and a communication control unit 25.

The print control unit 21 causes the printing device 11 to perform printing on the basis of the print image data.

The scan control unit 22 controls the image scanning device 12, causes it to read an image of each page in a document (printed matter), and generates raster image data of each page image.

The panel control unit 23 controls the operation panel 13, causes the operation panel 13 to display sorts of information, and receives a user operation to the operation panel 13.

The job control unit 24 receives a job request received from an unshown host device via the communication device 15 and the communication control unit 25 and a job request based on a user operation to the operation panel 13, and executes a job of the received job request using the print control unit 21, the scan control unit 22, and so forth. For example, when the job control unit 24 receives a print job request described in a page description language (PDL), the job control unit 24 generates raster image data based on the print job request, and causes the print control unit 21 to perform printing on the basis of the raster image data.

If combination printing is specified in the aforementioned job request, the job control unit 24 determines a combination quantity (i.e. the number of document pages to be included in one prinked page), combines plural page images of which the number is equal to the combination quantity in a document specified in the job request, and causes to perform printing the combined page images on one page of a printing paper sheet. In this embodiment, in combination printing, the plural page images are printed of a same size.

The job control unit 24 includes an area dividing unit 31, an area excluding unit 32, a character size identifying unit 33, and a combination quantity determining unit 34.

The area dividing unit 31 extracts character areas in each one of plural page images (i.e. page images included in a document to be printed in a job including combination printing) as objects of combination printing by area dividing. The job including combination printing may be a print job or a copy job.

The area excluding unit 32 excludes a character area that has a size $R(i)$ of which a ratio to a largest size $Rmax$ of the character areas in each one of the plural page images is smaller than a predetermined threshold value $e$ among the character areas extracted by the area dividing unit 31 in each one of the plural page images. In other words, a character area that satisfies the following formula is excluded from objects of which a smallest character size mentioned below is identified. Here a character area is a rectangle-shaped area circumscribed to either one character or plural continuous characters with an interval smaller than a predetermined threshold value, and a square measure of the rectangle shape (i.e. the number of pixels in the rectangle shape) may be used as a size of the character area.

$$R(i) \ / \ Rmax < e$$

Here $R(i)$ is a size of the i th character area in a page image, $Rmax$ is a largest value of one or more character areas $R(i)$ in the page image, and $e$ is a threshold value set in advance as a parameter larger than zero and either equal to or less than 1.

The character size identifying unit 33 identifies a smallest character size $Pmin$ of the character area that are not excluded by the area excluding unit 32 among the character areas extracted by the area dividing unit 31 in each one of the plural page images.

The character size identifying unit 33 does not identify the smallest character size of the character area excluded by the area excluding unit 32.

The combination quantity determining unit 34 determines a combination quantity $M$ of combination printing on the basis of the smallest character size $Pmin$ identified by the character size identifying unit 33.

In this embodiment, the combination quantity determining unit 34 (a) determines uppermost values $Mp$ of the combination quantity corresponding to the smallest character sizes $Pmin$ of respective ones of the page images, and (b) uses a smallest value among the uppermost values $Mp$ of the combination quantity of the plural page images as the combination quantity $M$ applied to combination printing of the plural page images.

Specifically, the combination quantity determining unit 34 uses, as the uppermost value $Mp$ of the combination quantity, a largest value among combination quantities with which a size $PAmin$ of a printed character of the smallest character size $Pmin$ in the page image in combination printing would be equal to or larger than a predetermined lowermost value $PL$. Here, as the character size, a character height by point is used.

Further, in this embodiment, a combination quantity setting value indicates a combination quantity applied to combination printing of the plural page images, an initial value of the combination quantity setting value is set as a maximum combination quantity available in combination printing by this image forming apparatus.

For example, if as a combination quantity, 1, 2, 4 and 9 are available in combination printing by this image forming apparatus, then the initial value of the combination quantity setting value is set as 9. The combination quantity determining unit 34 (c) determines an uppermost value Mp of the combination quantity of each one of the plural page images in turn, and (d) sets this uppermost value Mp to the combination quantity setting value if this uppermost value Mp is less than the current combination quantity setting value.

The communication control unit 25 controls the communication device 15, receives a job request from an unshown host device and transmits a notification to the unshown host device.

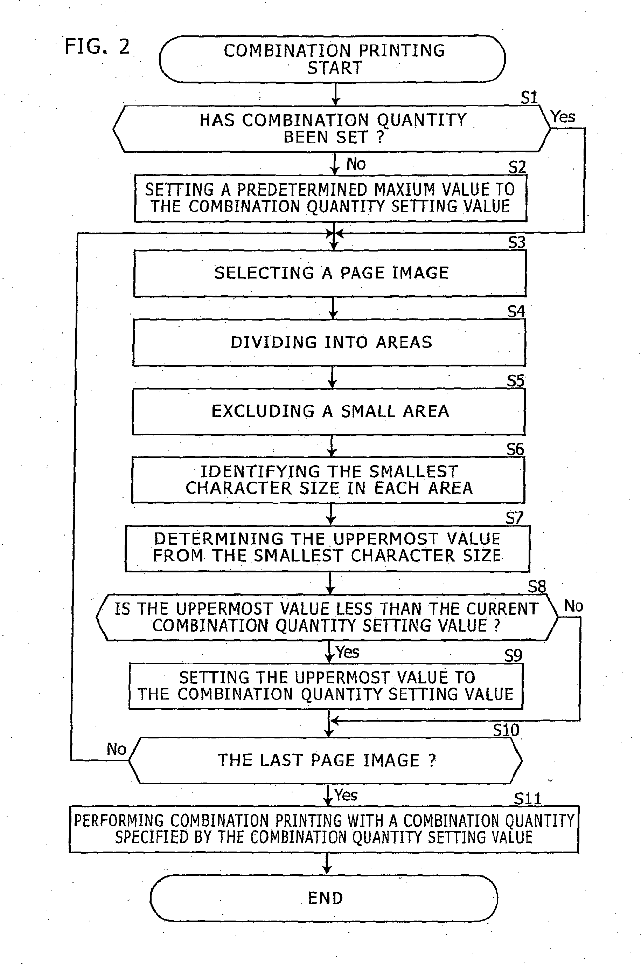

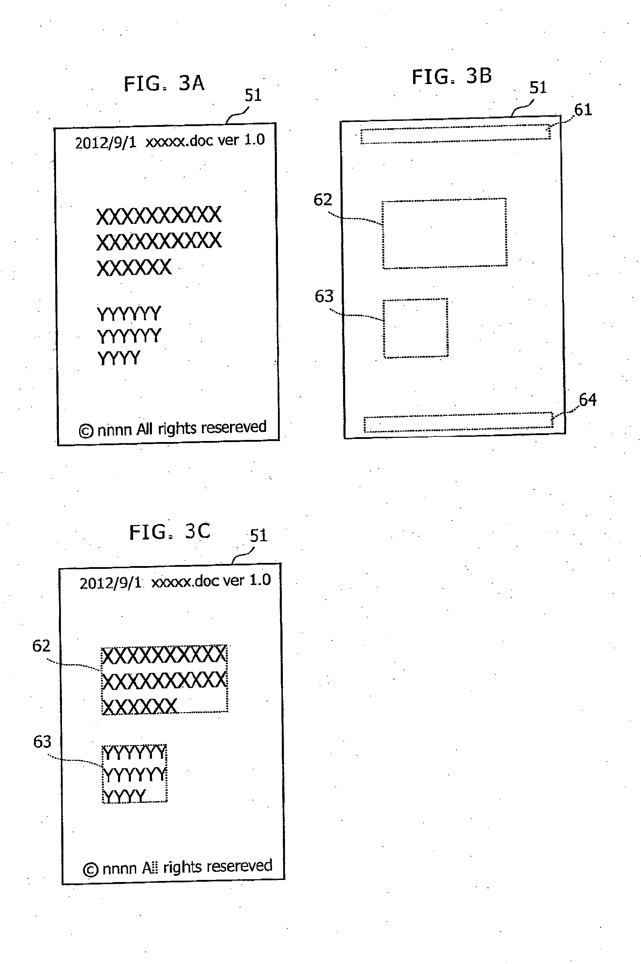

In the following part, a behavior of the aforementioned image forming apparatus is explained. Fig. 2 shows a flowchart that explains an action of the image forming apparatus shown in Fig. 1 to perform a job with combination printing. Figs. 3A to 3C show diagrams that indicate an example of a page image,

Upon receiving a job request which specifies combination printing, the job control unit 24 starts execution of the requested job. The job control unit 24 identifies whether or not in the job request a combination quantity, has been set by a user (Step S1), and if a combination quantity has not been set, the job control unit 24 sets an initial value of a combination quantity setting value as a maximum value of combination quantities available in this image forming apparatus (Step S2). If a combination quantity has been set, an initial value of a combination quantity setting value is set as the combination quantity in the job request.

Subsequently, the area dividing unit 31 selects a top page image among plural page images to be printed in this job (Step S3), and extracts one or plural character areas in this page image (Step S4). For example, in a case of a page image 51 shown in Fig. 3A, as shown in Fig. 3B, character areas 61 to 64 are extracted.

Among one or plural character areas extracted from the current page data, the area excluding unit 32 excludes a character area of a size R(i) less than a value obtained by multiplying the largest size Rmax by the aforementioned threshold value e from objects of subsequent processes.

The character areas 61 and 64 shown in Fig. 3C include relatively short character strings. In an example shown in Figs. 3A to 3C, if the threshold value e is set as 0.5 for example, then as shown in Fig. 3C, the character areas 61 and 64 are excluded due to their sizes smaller than a value obtained by multiplying the size of the character area 62 as the largest size Rmax by 0.5.

Subsequently, the character size identifying unit 33 identifies the smallest size Pmin of characters included in the character areas that have not been excluded.

In case of a print job, the smallest size Pmin of the characters is identified on the basis of the print job request described in PDL. In case of a copy job, the smallest size Pmin of the characters is identified on the basis of its raster image data using an OCR (Optical Character Recognition) technique.

In an example shown in Figs. 3A to 3C, if the character areas 61 and 64 are excluded, then the smallest character size is detected in the character areas 62 and 63 (here, 12 pt in the character area 63).

Subsequently, the combination quantity determining unit 34 uses, as the uppermost value Mp of the combination quantity of the current page image, a largest value among combination quantities with which a size PAmin of a printed character of the smallest character size Pmin in the page image in combination printing is equal to or larger than a predetermined lowermost value PL (i.e. a readable size, e.g. 6 pt) (Step S7). The uppermost value Mp is any one of combination quantities available in this image forming apparatus.

In an example shown in Figs. 3A to 3C, if the smallest character size Pmin is detected as 12 pt and the lowermost value PL of the Smallest character size after combination is 6 pt, then the uppermost value Mp is determined as 4, because a combination quantity equal to' or less than a squared value of $(Pmin / PL)$ is allowable.

Further, the combination quantity determining unit 34 identifies whether or not the uppermost value Mp of the current page image is less than the current combination quantity setting value (Step S8), and if the uppermost value Mp is less than the current combination quantity setting value, then the combination quantity determining unit 34 sets the uppermost value Mp to the combination quantity setting value (Step S9).

As mentioned, when the process of one page image is finished, the job control unit 24 identifies whether or not this page image is the last page image (Step S10); and if this page image is not the last page image, then the job control unit 24 returns to Step S3, selects a next page image (Step S3), and causes to perform the process in the same manner (Steps S4 to S9).

Finally, when the process of the last page image is finished, the job control unit 24 generates an image for combination printing (i.e. an image of one page in which reduced page images of the same number as a combination quantity are laid out) on the basis of a combination quantity indicated by the combination quantity setting value at the time, and causes the print control unit 21 and the printing device 11 to perform printing the image (Step S11).

For example, if a job involves four page images, the initial value of the combination quantity setting value is 9, and the uppermost values Mp of the combination quantity in the four page images are 9, 4, 4, 4, respectively, then the combination quantity setting value is 4 when the processed of all of the page images are finished, the combination quantity applied to combination printing is set as 4, a square measure of each one of the page images is reduced to its quarter, and the reduced page images are printed with 4-up.

In the aforementioned embodiment, the area dividing unit 31 extracts character areas in each one of plural page images as objects of combination printing by area dividing; the area excluding unit 32 excludes a character area that has a size of which a ratio to a largest size of the character areas in each one of the plural page images is smaller than a predetermined threshold value among the character areas extracted by the area dividing unit 31 in each one of the plural page images; the character size identifying unit 33 identifies a smallest character size of the character area that are not excluded by the area excluding unit 32 among the character areas extracted by the area dividing unit 31 in each one of the plural page images; and the combination quantity determining unit 34 determines a combination quantity of combination printing on the basis of the smallest character size identified by the character size identifying unit 33.

Therefore, page images are reduced on the basis of a combination quantity set without respect to small characters such as a header, a footer, or explanatory notes in a margin (e.g. characters in the character areas 61 and 64 shown in Fig. 3B). Such as a header, a footer, or explanatory notes in a margin, an unimportant part for reading a body text of a document are somewhat hard to read, but a maximum combination quantity that keeps readability of the body text are set. Consequently, while the document is readable, the number of required printing paper sheets for printing is reduced.

The description has been presented for purposes of illustration and description, and is not intended to be exhaustive or limited to the present invention.

For example, in the aforementioned embodiment, the uppermost value Mp is derived in Step S7 of Fig. 2, it is identified whether or not the uppermost value Mp is less than the current combination quantity setting value in Step S8. Alternatively, it may be configured to compare the smallest character size PAmin obtained when combination printing would be performed with a combination quantity indicated by the current combination quantity setting value with the lowermost value PL of the character size; derive the uppermost value Mp only if the smallest character size PAmin is less than the lowermost value PL; and perform Step S9.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1.  An image forming apparatus, comprising:

    an area dividing unit (31) configured to extract character areas (61, 62, 63, 64) in each one of plural page images as objects of combination printing by area dividing;
    an area excluding unit (32) configured to exclude a character area (61, 64) that has a size, of which a ratio to a largest size of the character areas in each one of the plural page images is smaller than a predetermined threshold value among the character areas extracted by the area dividing unit in each one of the plural page images;
    a character size identifying unit (33) configured to identify a smallest character size of the character area that are not excluded by the area excluding unit among the character areas extracted by the area dividing unit in each one of the plural page images; and
    a combination quantity determining unit (34) configured to determine a combination quantity of combination printing on the basis of the smallest character size identified by the character size identifying unit.

2.  The image forming apparatus according to claim 1 wherein
    the combination quantity determining unit (34) is further configured to (a) determine uppermost values of the combination quantity corresponding to the smallest character sizes of respective ones of the page images, and (b) use a smallest value among the uppermost values of the combination quantity of the plural page images as the combination quantity applied to combination printing of the plural page images.

3.  The image forming apparatus according to claim 2 wherein
    the combination quantity determining unit (34) is further configured to use, as the uppermost vale of the combination quantity, a largest value among combination quantities with which a size of a printed character of the smallest character size in the page image in combination printing is equal to or larger than a predetermined lowermost value.

4.  The image forming apparatus according to claim 2 or 3 wherein:

    an initial value of a combination quantity setting value that indicates a combination quantity applied to combination printing of the plural page images is set as a maximum combination quantity available in combination printing by this image forming apparatus; and
    the combination quantity determining unit (34) is further configured to (c) determine an uppermost value of the combination quantity of each one of the plural page images in turn, and (d) set this uppermost value to the combination quantity setting value if this uppermost value is less than the current combination quantity setting value.

5. The image forming apparatus according to any of claims 1 to 4 wherein
the character size identifying unit (33) is further configured not to identify a smallest character size of the character area excluded by the area excluding unit.

6. The image forming apparatus according to any of claims 1 to 5 wherein
in the combination printing, the plural page images are printed of a same size.

FIG. 1

```
         ┌──────────────┐                    ┌──────────────┐
         │COMMUNICATION │ 15                 │  OPERATION   │ 13
         │   DEVICE     │                    │    PANEL     │
         └──────┬───────┘                    └──────┬───────┘ 16
┌───────────────┼─────────────────────────────────┼──────────┐
│               │         CONTROLLER               │          │
│  ┌────────────┴─┐ 25    ┌─────────────────┐ 24  ┌┴─────────┐│ 23
│  │COMMUNICATION │       │ JOB CONTROL UNIT │     │  PANEL   ││
│  │CONTROL UNIT  │       │           ┌──────┴─┐31 │CONTROL UNIT││
│  └──────────────┘       │   │ AREA DIVIDING │   └──────────┘│
│                         │   │    UNIT       │              │
│                         │   └───────────────┘              │
│                         │           ┌────────┐32           │
│                         │   │ AREA EXCLUDING │             │
│                         │   │    UNIT        │             │
│                         │   └────────────────┘             │
│                         │           ┌────────┐33           │
│                         │   │CHARACTER SIZE  │             │
│                         │   │IDENTIFYING UNIT│             │
│                         │   └────────────────┘             │
│  ┌──────────┐22         │           ┌────────┐34 ┌────────┐│21
│  │   SCAN   │    │COMBINATION QUANTITY│       │  PRINT   ││
│  │CONTROL UNIT│  │DETERMINING UNIT    │       │CONTROL UNIT││
│  └────┬─────┘       └─────────────────┘       └────┬─────┘│
└───────┼──────────────────┬────────────────────────┼──────┘
        │             12    │        14              │    11
  ┌─────┴──────┐      ┌──────┴─────┐          ┌───────┴────┐
  │IMAGE SCANNING│    │   MEMORY   │          │  PRINTING  │
  │   DEVICE    │     └────────────┘          │   DEVICE   │
  └─────────────┘                             └────────────┘
```

FIG. 2

```
                COMBINATION PRINTING
                      START
```

S1
HAS COMBINATION QUANTITY
BEEN SET ?          Yes

No          S2
SETTING A PREDETERMINED MAXIUM VALUE TO
THE COMBINATION QUANTITY SETTING VALUE

S3
SELECTING A PAGE IMAGE

S4
DIVIDING INTO AREAS

S5
EXCLUDING A SMALL AREA

S6
IDENTIFYING THE SMALLEST
CHARACTER SIZE IN EACH AREA

S7
DETERMINING THE UPPERMOST VALUE
FROM THE SMALLEST CHARACTER SIZE

S8
IS THE UPPERMOST VALUE LESS THAN THE CURRENT
COMBINATION QUANTITY SETTING VALUE ?          No

Yes          S9
SETTING THE UPPERMOST VALUE TO
THE COMBINATION QUANTITY SETTING VALUE

S10
No          THE LAST PAGE IMAGE ?

Yes          S11
PERFORMING COMBINATION PRINTING WITH A COMBINATION QUANTITY
SPECIFIED BY THE COMBINATION QUANTITY SETTING VALUE

```
                      END
```

# FIG. 3A

51

```
2012/9/1  xxxxx.doc ver 1.0


        XXXXXXXXX
        XXXXXXXXX
        XXXXX

        YYYYYY
        YYYYYY
        YYYY


© nnnn All rights resereved
```

# FIG. 3B

51

61

62

63

64

# FIG. 3C

51

```
2012/9/1  xxxxx.doc ver 1.0
```

62

```
        XXXXXXXXX
        XXXXXXXXX
        XXXXX
```

63

```
        YYYYYY
        YYYYYY
        YYYY
```

```
© nnnn All rights resereved
```